Europäisches Patentamt

(19) European Patent Office

Office européen des brevets

(11) Publication number: **0 378 368**
**A2**

## (12) EUROPEAN PATENT APPLICATION

(21) Application number: **90300241.8**

(22) Date of filing: **09.01.90**

(51) Int. Cl.5: **H04B 10/24, G02B 6/42**

(30) Priority: **13.01.89 GB 8900779**

(43) Date of publication of application:
**18.07.90 Bulletin 90/29**

(84) Designated Contracting States:
**DE FR IT**

(71) Applicant: **Ferranti International Signal plc**
**Bridge House Park Road Gatley**
**Cheadle Cheshire SK8 4HZ(GB)**

(72) Inventor: **Moffat, James**
**39 Silverknowes Crescent**
**Edinburgh 4, Scotland(GB)**

(74) Representative: **Bradley, David Nicholas et al**
**Patents Department Ferranti International**
**plc Bridge House Park Road Gatley**
**Cheadle, Cheshire SK8 4HZ(GB)**

(54) **Optical coupler with a fibre link between transceivers.**

(57) A bidirectional optical coupler has a single optical fibre link between two transceivers. Each transceiver includes a holographic optical element (HOE), equivalent to a combination of lenses and a beam splitter; a source of monochromatic radiation; and a photodetector responsive to the radiation. Within a transceiver in the transmit mode, a divergent beam of radiation from the source is incident upon the HOE, and is diffracted, to form a pattern of interference fringes. Radiation is apparently focussed on the adjacent end of the optical fibre, and is transmitted by the fibre. At the other end of the optical fibre, the transceiver is in the receive mode, and the transmitted radiation is emitted as a divergent beam from the fibre, to be incident upon the HOE. The radiation is diffracted, and forms two angularly separated patterns of interference fringes. Thus, the radiation is apparently focussed upon the photodetector, (and upon the angularly separated, inoperable source).

*Fig. 1.*

## OPTICAL COUPLER WITH A FIBRE LINK BETWEEN TRANSCEIVERS

THIS INVENTION relates to a bidirectional optical coupler with a single optical fibre link between two transceivers.

Such a bidirectional optical coupler may be included within an optical communications system, possibly comprising a data transmission system.

It is known to provide a bidirectional optical coupler with two optical fibre links, each such link having a transmit module at one end, and a receive module at the other end, each link to operate exclusively, and independently of the other link, in one of the two opposing directions in respect of which the coupler is required to tend.

It is an object of the present invention to provide a novel and advantageous bidirectional optical coupler with a single optical fibre link between two transceivers.

According to the present invention an optical coupler has a single optical fibre link between two transceivers, each transceiver includes a holographic optical element, which holographic optical element is the equivalent of, at least, a predetermined combination of a plurality of lenses and a beam splitter, and each transceiver also includes at least one source of radiation of a predetermined wavelength, and at least one photodetector responsive to radiation transmitted within the system from said at least one source of the other, associated transceiver, the arrangement of each transceiver is so that, when in the transmit mode, radiation from said at least one source is transmitted by the holographic optical element, at least generally in one of two opposing directions through the holographic optical element, and is diffracted to form an interference fringe pattern, the radiation forming at least the highest order interference fringe of the pattern is incident upon the adjacent end of, and is transmitted by, the associated optical fibre, and when in the receive mode, radiation from said at least one source of the other, associated transceiver, transmitted by, and diverging from the adjacent end of, the associated optical fibre, is transmitted by the holographic optical element, at least generally in the other of said two opposing directions through the holographic optical element, and is diffracted to form at least two angularly separated interference fringe patterns, the radiation forming at least the highest order interference fringe of one of the angularly separated interference fringe patterns is incident upon, and is detected by, the photodetector.

Radiation forming at least the highest order interference fringe of either the other, or an other, of said at least two angularly separated interference fringe patterns, formed when a transceiver is in the receive mode, is incident upon said at least one source. However, this is without effect upon the operation of the optical coupler, if this radiation is prevented from causing any photodetector of the optical coupler providing a spurious output signal.

Such an arrangement for a bidirectional optical coupler is advantageous because it avoids the necessity of providing two optical fibre links.

Further, the use of a holographic optical element (HOE), in each of the transceivers, provides an advantageously simple construction for each transceiver. The HOE's required for an optical coupler in accordance with the present invention are each required to having a plurality of superimposed, inclined gratings embodied therein. For a HOE required to provide two angularly separated interference fringe patterns, there are required to be two superimposed, inclined gratings embodied therein.

Inevitably radiation emitted from each source, for example, each source comprising either a light-emitting-diode (LED), or a laser, is divergent; as also is the radiation transmitted by the optical fibre link, and emitted from an end of the fibre. For example, radiation emitted from an end of an optical fibre has a divergence (Numerical Aperture) half-angle of $11.5°$. In a bidirectional optical coupler of a form corresponding to that which the present invention relates, efficient transfer, employing optical elements not comprising holographic optical elements, of a divergent beam of radiation from a source, to the adjacent end of the optical fibre link; and of a divergent beam of radiation from the adjacent optical fibre end, to a photodetector; requires each divergent beam to be collimated, and then the collimated beams to be focussed onto the receiving surfaces. In the collimated part of the beam path from the adjacent optical fibre end, it is required that there is a beam splitter.

For a bidirectional optical coupler of the simplest form to which the present invention relates, when two angularly separated interference fringe patterns are capable of being produced in each transceiver, it is required to provide in each transceiver the equivalent of a predetermined combination of, a high Numerical Aperture collimating lens for the divergent beam of radiation received from the adjacent optical fibre end; a similar lens for the divergent beam of radiation from the source; an apparent converging lens to be considered as focussing collimated radiation onto the adjacent end of the optical fibre; an apparent similar lens to be considered as focussing collimated radiation onto the sensitive surface of the photodetector; and, in the collimated part of the beam path from the adjacent optical fibre end, a beam splitter. Further, in accordance with the present invention, the equivalent of such a predetermined combination, of a plurality of lenses and a beam splitter, advantageously, can be provided by a single HOE, having two, superimposed, inclined gratings embodied therein.

If suitable optical elements, not comprising holographic optical elements, were to be included within each transceiver, instead of the equivalent HOE, they would be difficult to mount, and to align in the required orientation in relation to each other. For some such arrangements, the alignment, and positioning, of the optical elements would be required to be done with great precision. In contrast, the use of a single, equivalent, HOE, which is both simple to mount, and to position, within the associated transceiver, also ensures that it is required only to adjust precisely the orientation, and position, of the HOE within each transceiver.

In addition, because the HOE is employed as a transmissive element, small displacements of the HOE, such as may be caused in the operation of the optical coupler; and/or due to temperature changes likely to be encountered by the HOE in the operation of the optical coupler; do not have a significant effect on the efficiency of the operation of the optical coupler.

Usually, but not essentially, the sources of both transceivers of the optical coupler emit radiation of the same predetermined wavelength. If the sources emit radiation of significantly different wavelengths, the efficiency of the operation of the optical coupler is impaired.

According to another aspect the present invention comprises an optical communications system including an optical coupler of any one of the possible forms referred to above, and in accordance with the present invention.

The present invention will now be described by way of example with reference to the accompanying drawings, in which

Figure 1 represents a bidirectional optical coupler, comprising a communications system, and, in accordance with the present invention, has a single optical fibre link between two transceivers, there being illustrated in Figure 1 the arrangement when the left hand transceiver is only in the transmit mode, and the right hand transceiver is only in the receive mode, and

Figure 2 corresponds to Figure 1, but is illustrative of the arrangement when the right hand transceiver is only in the transmit mode, and the left hand transceiver is only in the receive mode.

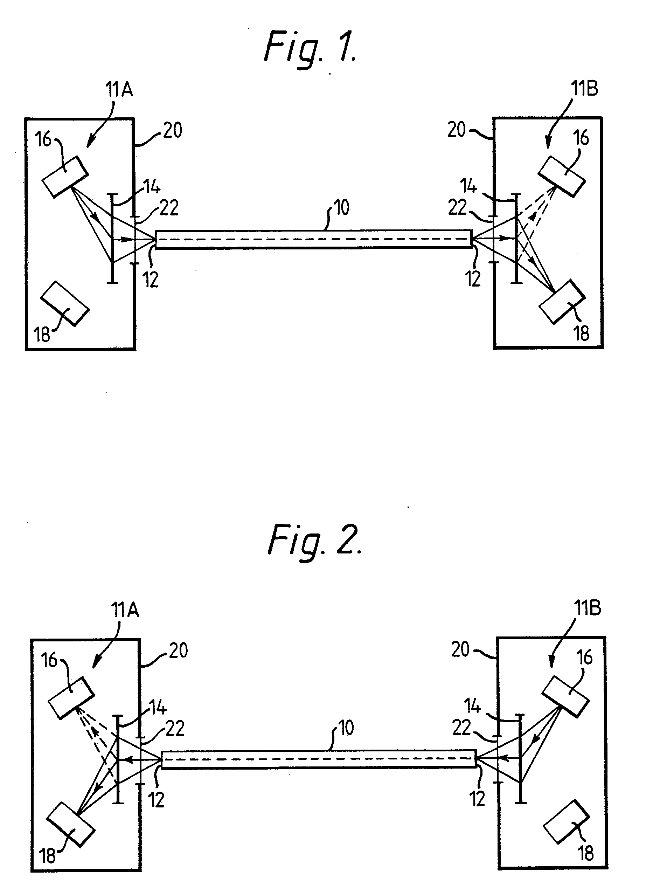

The bidirectional optical coupler, to be included in an optical communications system, shown in Figures 1 and 2, and in accordance with the present invention, has a single optical fibre link 10, with two identical transceivers 11, each transceiver, individually, co-operating with an adjacent end 12 of the optical fibre.

Each transceiver 11 includes a holographic optical element (HOE) 14, in the form of a thin, planar, plate, and equivalent to a predetermined combination of a plurality of lenses and a beam splitter.

Each transceiver 11 also includes a source 16 of monochromatic light, having a wavelength in either the red, or the infra-red, parts of the spectrum. Both sources 16 emit coherent radiation of the same wavelength. Conveniently, each source 16 comprises a light-emitting-diode (LED), or a laser.

A photodetector 18, responsive to the radiation emitted by the sources 16, is also included in each transceiver 11.

As shown in Figure 1, the left hand transceiver 11A is in the transmit mode, and the source 16 thereof causes a divergent beam of coherent radiation, of the predetermined wavelength, to be incident on the HOE 14, the divergent beam having an axis inclined at a finite, acute angle to a perpendicular to the plane of the HOE. This radiation is transmitted at least generally in one direction through the HOE 14, and is diffracted to form a pattern of interference fringes. Radiation forming at least the highest order fringe of the pattern of interference fringes is incident upon the adjacent end 12 of the associated optical fibre link 10. Consequently, it is possible to consider that the divergent radiation beam from the source 16 is converged, and is brought to a focus at the end 12 of the associated optical fibre link 10, by transmission through the HOE 14. The apparent convergent beam of radiation has an axis coincident with perpendiculars both to the plane of the HOE 14, and to the adjacent end 12 of the optical fibre link 10. The perpendicular to the adjacent end 12 of the optical fibre link 10 comprises the axis of the fibre end. In this respect, the HOE 14 causes there to be a particular, finite, angle of deviation between the axis of the divergent beam of radiation incident upon the HOE from the source 16, and the axis of the consequential, apparent convergent beam of radiation incident upon the adjacent end 12 of the associated optical fibre link 10.

The radiation incident upon the adjacent end 12 of the optical fibre link 10 is transmitted by the link, and is emitted as a divergent beam from the other end 12 of the link. The divergent beam has an axis coincident with a perpendicular, comprising the axis of the other end 12 of the optical fibre link 10, and is received by the right hand transceiver 11B, which transceiver is in the receive mode. In particular, the axis of the divergent beam also is coincident with a perpendicular to the plane of the HOE 14 of the transceiver 11B. This radiation is transmitted at least generally in one direction by the HOE 14, and is diffracted to form two angularly separated interference fringe patterns. Radiation forming at least the highest order fringe of one of the two angularly separated patterns of interference fringes is incident upon the radiation sensitive surface of the photodetector 18 of the transceiver 11B, and is detected by the photodetector. Consequently, it is possible to consider that the divergent radiation beam from the optical fibre link 10 is converged, and is brought to a focus on the radiation sensitive surface of the photodetector 18. The apparent convergent beam has an axis inclined at a finite, acute angle to a perpendicular to the plane of the HOE 14.

Radiation forming at least the highest order fringe of the other of the two angularly separated interference fringe patterns is incident upon the source 16 of the right hand transceiver 11B, which source is inoperable, because the transceiver is in the receive mode. As for the radiation incident upon the photodetector 18, it is possible to consider that the divergent radiation beam from the optical fibre link 10 is converged, and is brought to a focus on the source 16. The apparent convergent beam has an axis inclined at a finite, acute angle to a perpendicular to the plane of the HOE 14. The radiation incident upon the inoperable source 16 is without effect upon the operation of the optical coupler, if this radiation is prevented from causing the photodetector 18 of either transceiver 11A and 11B providing a spurious output signal. The photodetector 18 of the transceiver 11A could provide such a spurious output signal, if the radiation incident upon the inoperable source 16 of the transceiver 11B is reflected so as to be received by the optical fibre link 10, and thereby is transmitted to the transceiver 11A.

The two interference fringe patterns are equiangularly separated in relation to the perpendicular to the HOE 14, which perpendicular is coincident with the axis of the adjacent end 12 of the associated optical fibre link 10. In particular, each of the two apparent convergent radiation beams, considered as being transmitted by the HOE 14, in consequence of the divergent radiation beam incident upon the HOE from the adjacent end 12 of the optical fibre link 10, has an apparent axis inclined at an angle to the axis of the divergent radiation beam from the adjacent end of the optical fibre link. In relation to the two apparent, angularly separated, radiation beams, considered individually, the angles of inclination between the two associated axes, and the axis of the beam from the optical fibre link, are the same; but the angles of inclination are of opposite sense for the two apparent radiation beams from the HOE.

When a real, divergent radiation beam from a source is incident upon a HOE 14, with the axis of the beam inclined to a perpendicular to the planar HOE by an angle of the magnitude referred to in the preceding paragraph, and of either sense, only one interference fringe pattern is formed, with the highest order fringe thereof coincident with the perpendicular to the HOE. When a real, divergent radiation beam is incident upon a HOE 14, from the adjacent end of the optical fibre link, and with the axis of the beam coincident with a perpendicular to the planar HOE, two angularly separated interference fringe patterns are formed. In relation to each of such two interference fringe patterns, considered individually, the highest order fringe thereof is coincident with a line inclined to the perpendicular to the HOE by an angle of the magnitude referred to in the preceding paragraph, and of either sense.

As shown in Figure 2, the right hand transceiver 11B is in the transmit mode, instead of the receive mode of Figure 1. The source 16 of the transceiver is now operable, and causes a divergent beam of coherent radiation, of the same wavelength as the coherent radiation emitted by the source 16 of the transceiver 11A, to be incident upon the HOE 14. The divergent beam has an axis inclined at a finite, acute angle to a perpendicular to the plane of the HOE 14. This angle of inclination is the same as the angle at which the axis of the apparent convergent beam incident on the source 16, when the transceiver 11B was in the receive mode as shown in Figure 1, was inclined to the same perpendicular to the plane of the HOE. As when the left hand transceiver 11A was in the transmit mode as shown in Figure 1, this radiation from the source 16 of the transceiver 11B is transmitted by the HOE 14, at least generally in the opposite direction to when the transceiver 11B was in the receive mode, and is diffracted to form a pattern of interference fringes. Radiation forming at least the highest order fringe of the pattern of interference fringe is incident upon the adjacent end 12 of the associated optical fibre link 10.

This radiation is transmitted by the optical fibre link 10, and is emitted as a divergent beam from the other end 12 of the link, to be received by the left hand transceiver 11A. The transceiver 11A is in the receive mode. The divergent beam has an axis coincident with perpendiculars both to the other end 12 of the optical fibre link 10, and to the plane of the HOE 14 of the transceiver 11A. The perpendicular to said other end 12 of the optical fibre link 10 comprises the axis of the optical fibre end. The radiation then is transmitted by the HOE 14, at least generally in the opposite direction to when the transceiver 11A was in the transmit mode, and is diffracted to form two angularly separated interference fringe patterns. Radiation forming at least the highest order fringe of one of the two angularly separated patterns of interference fringes is incident upon the radiation sensitive surface of the photodetector 18 of the transceiver 11A, and is detected.

Radiation forming at least the highest order fringe of the other of the two angularly separated interference fringe patterns is incident upon the source 16 of the left hand transceiver 11A, which source is inoperable, because the transceiver is in the receive mode. As for the radiation incident upon the photodetector 18, it is possible to consider that the divergent radiation beam from the optical fibre link 10 is converged, and is brought to a focus on the source 16. The divergent beam incident on the source 16 has an axis inclined at the same finite, acute angle to a perpendicular to the plane of the HOE 14, as the angle at which the axis of the apparent convergent beam incident on the source 16, when the transceiver 11A was in the receive mode shown in Figure 1, was inclined to the same perpendicular to the plane of the HOE. The radiation incident upon the inoperable source 16 is without effect upon the operation of the optical coupler, if this radiation is prevented from causing the photodetector 18 of either transceiver 11A and 11B providing a spurious output signal.

The two interference fringe patterns are equiangularly separated, in relation to the perpendicular to the HOE 14, which perpendicular is coincident with the axis of the adjacent end 12 of the associated optical fibre link 10.

The illustrated bidirectional optical coupler, in addition to operating as described above, with reference to the Figures, is capable of operating so that the transceivers 11A and 11B transmit radiation to, and simultaneously receive radiation from, the adjacent ends 12 of the optical fibre link 10. Thus, each HOE simultaneously transmits radiation in both said directions, and simultaneously both transmits radiation to, and receives radiation from, the associated source 16, in addition to transmitting radiation to the associated photodetector 18. Such an arrangement is not illustrated.

It is required that moisture cannot be deposited upon any of the constituent parts of the transceivers, because condensation upon such constituent parts impairs their performance. Thus, each transceiver 11A or 11B is hermetically sealed within an enclosure 20 having a window 22. The HOE 14, the source 16, and the photodetector 18, of each transceiver 11A or 11B, are mounted in the associated enclosure 20 in the required relationship with respect to each other, and to the window 22 of the enclosure. Thus, it is required that the plane of the HOE 14 is parallel to the window 22; and that the source 16, and the photodetector 18, are equiangularly separated in relation to a perpendicular to the plane of HOE, which perpendicular is coincident with the axis of the adjacent end 12 of the associated optical fibre link 10. Further, it is required that the source 16, and the photodetector 18, are orientated in relation to the HOE 14 such that, radiation from the source is apparently converged by the HOE, and is transmitted by the window 22, to be focussed on the adjacent end 12 of the associated optical fibre link 10; and radiation of the same wavelength, transmitted by the link 10 in the opposite direction, is transmitted by the window 22, and is apparently converged by the HOE, to be focussed on the photodetector, and on the source.

It is required that reflection of radiation within each enclosure 20 is reduced as much as conveniently can be arranged, so that spurious output signals are not provided by the photodetectors 18. In order to assist in obtaining this desired criterion, each window 22 is made non-reflective by the provision of a known form of metallic coating thereon.

Conveniently, each transceiver 11A or 11B is connected operably to the adjacent end 12 of the associated optical fibre link 10, by a known form of adapter, not shown, for the ends of optical fibres. In one such arrangement, each adapter is soldered, by Indium, to a flanged member in which the window 22 of the associated enclosure 20 is seated, so that the adapter forms part of the hermetically sealed enclosure 20.

Irrespective of how the transceivers 11A and 11B are coupled optically, in the required manner, to the associated optical fibre link 10, conveniently, the transceivers and the link are provided as an integrated unit, with the transceivers secured to the link.

Each illustrated HOE 14 comprises two, superimposed, inclined gratings, of a predetermined form.

HOE's, substantially of the same form as that required for the HOE's 14 of the optical coupler described above, are known, and the HOE's 14 can be provided in any convenient, known manner. In one known way, each HOE is fabricated by taking a thin, planar plate of hardened dichromated gelatin, and photographically recording the desired gratings therein. A discussion of the relevant process parameters is given in the paper entitled "Dichromated gelatin for the fabrication of holographic optical elements", by B.J. Change and C.D. Leonard, APPLIED OPTICS, Vol. 18, No. 14, Pages 2407 to 2417, 15th July 1979.

Dichromated gelatin is insensitive to radiation in the red, and infra-red, parts of the spectrum, radiation in which spectrum parts is desired to be employed in the operation of known optical communications systems. Thus, it is required that the two, superimposed, inclined gratings, for the HOE's 14, are formed in thin, planar plates of dichromated gelatin employing photographic techniques, and by using radiation, for example, in the blue, or green, parts of the spectrum. Conveniently, radiation to be used in forming the required gratings of the HOE's 14 is provided by an argon ion laser emitting radiation with a wavelength of 514.5 nanometres. Hence, in designing the superimposed gratings to be reproduced photographically within the HOE's 14, it is required to take into account the wavelength change between the radiation used to record the gratings in the dichromated gelatin plates, and the radiation used in the operation of the optical communications system with the HOE's. Otherwise there occur unacceptable changes in the efficiency of the operation of the HOE's in providing the desired diffraction, and in the characteristics of the interference fringes produced thereby. In particular, in taxis respect, the effective radius of curvature, and hence the effective focal length, of each lens considered as being embodied in the HOE's 14 is dependent upon the wavelength of the radiation transmitted by each HOE. In addition, the magnitude of the angle of inclination between the axis of a real, divergent radiation beam incident upon a HOE 14, and the axis of the consequent, apparent, convergent radiation beam, or the axes of each of the two consequent, apparent, convergent radiation beams, provided by the, or each, produced interference fringe pattern, as referred to above, also is dependent upon the wavelength of the radiation. Both these features have to be considered when forming photographically the gratings of each HOE 14, employing radiation of a wavelength different from that to be used with the HOE, when the bidirectional optical coupler, including such HOE's, is in operation.

It is known to model the characteristics of the interference fringes to be produced by different gratings, by employing ray tracing and coupled wave theory computer programs. In this manner, desirable gratings to be reproduced in the HOE's of an optical coupler in accordance with the present invention, are determined, and a master is obtained, which master is to be used in the photographic reproduction of the gratings in the HOE's.

An optical communications system, including the optical coupler described above, is completed by electronic means connected to the radiation source 16, and to the photodetector 18, of each transceiver 11A or 11B, of the optical coupler. When the optical communications system comprises a data transmission system, each such electronic means, conveniently, comprises a drive circuit for the associated radiation source 16, the drive circuit being arranged to be activated, and to be inhibited, in response to digital input signals thereto; and an amplifier for output signals from the associated photodetector 18, the amplifier output being connected to the series combination of an equalising circuit, a sampling device, and a decision device, the sampling device also being arranged to receive a timing signal from an extraction circuit in response to each signal from the equalising circuit. In response to each signal provided by the photodetector 18, the decision device provides a corresponding signal, each such corresponding signal comprising a required digital output signal from the transceiver.

Conveniently, the electronic means associated with each transceiver comprises a hybrid circuit assembly, not shown, of a conventional construction, and mounted, in any suitable way, within the enclosure 20 of the associated transceiver 11A or 11B. The leads for the digital input signals, and for the digital output signals, associated with a transceiver 11A or 11B, extend through the enclosure 20 from the hybrid circuit assembly, to be connected to appropriate means associated with, but not considered as comprising part of, the data transmission system.

Instead of being included in an optical communications system, a bidirectional optical coupler, in accordance with the present invention, may be used in any application in which there is required high coupling efficiency; and/or insensitivity to the small displacements to which optical elements, provided in the transceivers instead of the HOE's, are subject, such small displacements possibly being caused in the operation of the coupler, and/or possibly as a result of temperature changes caused by the operation of the coupler.

The HOE's may not be planar in form.

Other arrangements for an optical coupler, in accordance with the present invention, are possible. For example, each HOE may be required to split a radiation beam incident thereon into more than two angularly separated patterns of interference fringes, there being the same plurality of gratings embodied in the HOE as there are fringe patterns to be produced, each grating being associated individually with a fringe pattern. A beam splitter not comprising a holographic optical element can only split an incident beam into two beams, so that, if the incident beam is required to be split into more than two beams, an appropriate number of beam splitters not comprising holographic optical elements are required in the transceiver of the coupler. In contrast, a beam splitter provided by a single HOE, conveniently, can be considered either as splitting an incident beam into any desired number of beams, or as comprising, in effect, the appropriate number of beam splitters.

Thus, each transceiver may have more than one source, and the HOE is required to form a required interference fringe pattern, radiation providing the highest order fringe thereof to be received by the adjacent optical fibre end, with radiation received from each source. Further, each transceiver may have more than one photodetector, each arranged to receive individually radiation providing the highest order fringe of an individually associated interference fringe pattern of a plurality of angularly separated fringe patterns produced.

In some convenient arrangements for the optical coupler, each transceiver has a HOE producing a plurality (n) angularly separated interference fringe patterns, and has (m) sources, and (p) photodetectors. Each source, and each photodetector, individually, is associated with a fringe pattern, no fringe pattern is associated with both a source and a photodetector, and (n) is equal to the sum of (m) and (p). Other arrangements are also possible, for example, a source and a photodetector, or two sources, are mounted in close proximity with each other, so that both receive radiation providing the highest order fringe of the same interference fringe pattern. It is not essential that both transceivers of the optical coupler are the same. Thus, the two transceivers may have different arrangements of sources and photodetectors. The HOE's of the two transceivers may provide different numbers of interference fringe patterns, and especially this is required if, because of the arrangements of the sources and photodetectors, otherwise a fringe pattern, or patterns, would be redundant.

It is also possible that, in the collimated part of each beam path from a plurality of sources of a transceiver, a beam combiner is provided. Thus, radiation from more than one source can be combined, before being transmitted to the adjacent optical fibre end. Hence, the associated HOE is required to be the equivalent of at least one beam combiner, in addition to being the equivalent of at least one beam splitter. A beam combiner not comprising a holographic optical element can only combine two incident beams, so that, if more than two beams are to be combined, an appropriate number of beam combiners not comprising holographic optical elements are required in the transceiver of the coupler. In contrast, a beam combiner provided by a single HOE, conveniently, can be considered either as combining any desired number of incident beams, or, as comprising, in effect, the appropriate number of beam combiners.

If a HOE is required to produce a plurality (m) interference fringe patterns then the HOE is required to be the equivalent of a predetermined combination of (m) pairs of lenses, an appropriate number of beam splitters, and an appropriate number of beam combiners.

The directions into which a beam of incident radiation is split; the directions from which divergent beams of incident radiation apparently can be converged in a desired manner; and the directions from which incident beams of radiation can be combined; by a HOE, are determined by the form of the gratings embodied in the HOE.

The plurality of interference fringe patterns provided by a HOE need not be equi-angularly separated from each other; nor need two constituent interference fringe patterns be equi-angularly separated from a perpendicular to the planar HOE.

## Claims

1. An optical coupler has a single optical fibre link between two transceivers, each transceiver includes a holographic optical element, which holographic optical element is the equivalent of, at least, a predetermined combination of a plurality of lenses and a beam splitter, and each transceiver also includes at least one source of radiation of a predetermined wavelength, and at least one photodetector responsive to radiation transmitted within the system from said at least one source of the other, associated transceiver, the arrangement of each transceiver is so that, when in the transmit mode, radiation from said at least one source is transmitted by the holographic optical element, at least generally in one of two opposing directions through the holographic optical element, and is diffracted to form an interference fringe pattern, the radiation forming at least the highest order interference fringe of the pattern is incident upon the adjacent end of, and is transmitted by, the associated optical fibre, and when in the receive mode, radiation from said at least one source of the other, associated transceiver, transmitted by, and diverging from the adjacent end of, the associated optical fibre, is transmitted by the holographic optical element, at least generally in the other of said two opposing directions through the holographic optical element, and is diffracted to form at least two angularly separated interference fringe patterns, the radiation forming at least the highest order interference fringe of one of the angularly separated interference fringe patterns is incident upon, and is detected by, the photodetector.

2. An optical coupler as claimed in claim 1 in which each transceiver has one source, one photodetector, and a holographic optical element arranged to provide two angularly separated interference fringe patterns, and the fringe patterns are equi-angularly separated from a perpendicular to the holographic optical element.

3. An optical coupler as claimed in claim 1, or claim 2, in which each transceiver is provided within an hermetically sealed enclosure, the enclosure having a window for the radiation emitted from the, or each, source of the transceiver, and for radiation from the other transceiver, and received from the end of the optical fibre link adjacent to said transceiver.

4. An optical coupler as claimed in claim 3 in which each provided window is non-reflective, by the provision of a metallic coating thereon.

5. An optical coupler as claimed in claim 3, or claim 4, in which each provided window is secured to an adapter for the adjacent end of the optical fibre link, and the adapter forms part of the hermetically sealed enclosure for the associated transceiver.

6. An optical communications system including an optical coupler as claimed in any one of the preceding claims.

*Fig. 1.*

*Fig. 2.*